(19) Europäisches Patentamt / European Patent Office / Office européen des brevets

(11) **EP 2 175 260 A1**

(12) **DEMANDE DE BREVET EUROPEEN**

(43) Date de publication:
**14.04.2010 Bulletin 2010/15**

(51) Int Cl.:
*G01N 21/95* (2006.01) *G11B 7/26* (2006.01)

(21) Numéro de dépôt: **09172210.8**

(22) Date de dépôt: **05.10.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **10.10.2008 FR 0856861**

(71) Demandeur: **COMMISSARIAT A L'ENERGIE ATOMIQUE**
**75015 Paris (FR)**

(72) Inventeurs:
• **Mimouni, Salim**
**38100 Grenoble (FR)**
• **Laulagnet, Fabien**
**38600 Fontaine (FR)**

(74) Mandataire: **Ilgart, Jean-Christophe**
**Brevalex**
**3, rue du Docteur Lancereaux**
**75008 Paris (FR)**

(54) **Dispositif de test pour la caractérisation de materiaux utilisés pour l'enregistrement optique**

(57) Il s'agit d'un dispositif de test pour la caractérisation d'un matériau utilisé dans un support d'enregistrement optique (10). Il comporte une source laser (20) destinée à diriger un faisceau laser incident (21) vers le support d'enregistrement optique (10), le faisceau laser incident (21) traversant un objectif de focalisation (22) avant d'atteindre le support d'enregistrement optique (10) et de s'y réfléchir en un faisceau laser réfléchi (25).

Il comporte en outre un diaphragme (23) pour réduire l'ouverture numérique du faisceau laser incident (21) en dessous de celle de l'objectif de focalisation (22), ce diaphragme (23) se trouvant entre la source laser (20) et l'objectif de focalisation (22) et un dispositif d'interception (26) d'une coupe du faisceau laser réfléchi (25) après son passage dans l'objectif de focalisation (22) mais avant qu'il n'atteigne le diaphragme (23).

FIG. 2

EP 2 175 260 A1

**Description**

**DOMAINE TECHNIQUE**

La présente invention est relative à un dispositif de test pour la caractérisation de matériaux utilisés pour l'enregistrement optique. Ces dispositifs de test permettent de caractériser la capacité d'inscription des couches minces sous l'influence d'un faisceau laser focalisé ainsi que leur capacité à rendre le contraste découlant d'une inscription lorsqu'elles sont lues par un faisceau laser de plus faible intensité.

**ÉTAT DE LA TECHNIQUE ANTÉRIEURE**

Un dispositif de test pour la caractérisation de matériaux utilisés dans un support d'enregistrement optique est, par exemple, connu par la publication de Masud Mansuripur et al. « Static tester for characterization of phase-change, dye-polymer, and magneto-optical media for optical data storage » Applied Optics, vol 38, issue 34, pages 7095-7104 également publiée sous forme de demande de brevet internationale WO 00/57413. Un tel dispositif de test est représenté sur la figure 1. Il comporte un compartiment 1 d'observation d'un support d'enregistrement 2 sur lequel des données doivent être inscrites. Le compartiment d'observation est de type microscope en lumière polarisée. Il comporte de plus un compartiment d'inscription et de test comportant deux diodes laser 3, 4 de longueurs d'ondes différentes mais voisines. La première diode dite diode d'inscription, par exemple celle référence 3, produit un faisceau d'inscription 7 pulsé destiné à inscrire des marques sur l'échantillon 2 lorsqu'il est focalisé à l'aide d'un objectif 5 possédant une ouverture numérique donnée. Cet objectif 5 est celui du microscope. Le faisceau d'inscription 7 altère le support d'enregistrement 2 et génère un changement dans les propriétés de réflexion et de diffraction du support d'enregistrement 2. L'autre diode laser 4 produit un faisceau laser 8 continu dit faisceau sonde qui a une puissance inférieure à celle du faisceau d'écriture 7. Le faisceau sonde 8 traverse également l'objectif 5. Il permet d'acquérir le changement de réflectivité. Les deux faisceaux laser 7, 8 sont réfléchis par le support d'enregistrement 2 et dirigés vers une partie de test du compartiment d'inscription et de test. Cette partie comporte au moins un diviseur de faisceau polarisant 9 et une paire de détecteurs D1, D2. Le compartiment d'observation 1 du dispositif de test permet de régler la position du support d'enregistrement et les faisceaux d'inscription et sonde. Ensuite on peut effectuer des essais d'écriture avec le faisceau d'écriture pulsé 7, ces tests étant analysés grâce au faisceau sonde 8.

De plus on plus on cherche à stocker le maximum de données sur des zones de plus en plus petites du support d'enregistrement. Des supports d'enregistrements utilisant un matériau ayant des propriétés optiques non linéaires et la technologie « super-resolution optical near-field structure » pour structure optique champ proche à super résolution, encore appelée Super-Rens permettent d'inscrire des données avec un intervalle d'écriture de l'ordre de quelques dizaines de nanomètres seulement alors que sur les disques compacts classiques l'intervalle est de quelques centaines de nanomètres. On rappelle qu'un matériau ayant des propriétés optiques non linéaires est un matériau dont l'indice de réfraction dépend le l'intensité du faisceau optique qui l'éclaire.

Or le dispositif de test de Masud Mansuripur et al. ne permet pas d'acquérir au niveau des détecteurs les effets de la non-linéarité du matériau d'inscription.

**EXPOSÉ DE L'INVENTION**

La présente invention a pour but de proposer un dispositif de test pour la caractérisation de matériaux utilisés dans un support d'enregistrement optique ne présentant pas la limitation évoquée ci-dessus et étant apte à tester des matériaux d'enregistrement ayant des propriétés optiques non linéaires.

Pour y parvenir la présente invention est un dispositif de test pour la caractérisation d'un matériau utilisé dans un support d'enregistrement optique, comportant une source laser destinée à diriger un faisceau laser incident vers le support d'enregistrement optique. Le faisceau laser incident traverse un objectif de focalisation avant d'atteindre le support d'enregistrement optique et de s'y réfléchir en un faisceau laser réfléchi. Selon l'invention, le dispositif de test comporte un diaphragme pour réduire l'ouverture numérique du faisceau laser incident en dessous de celle de l'objectif de focalisation, ce diaphragme se trouvant entre la source laser et l'objectif de focalisation, et un dispositif d'interception d'une coupe du faisceau laser réfléchi après son passage dans l'optique de focalisation mais avant qu'il n'atteigne le diaphragme.

Il est préférable que le diaphragme ait une ouverture ajustable pour pouvoir ajuster l'ouverture numérique du faisceau incident de manière à pouvoir observer la variation de l'effet non linéaire et de la mesurer.

L'objectif de focalisation possède une pupille de collection, la coupe du faisceau laser réfléchi étant de préférence réalisée dans le plan de la pupille de collection de l'objectif de focalisation.

L'objectif de focalisation possède un plan focal objet, le matériau du support à caractériser étant à placer dans le plan focal objet.

Le dispositif d'interception peut être un écran ou un détecteur d'images intégré ou non à une caméra CCD ou CMOS.

Le détecteur peut être segmenté avec une partie centrale et une partie périphérique qui entoure la partie centrale, la partie périphérique étant destinée à détecter un anneau externe qui apparaît si le faisceau laser incident s'est réfléchi sur le matériau à caractériser et que ce matériau est un matériau optiquement non linéaire, cet anneau contenant de l'information sur la non-linéarité du matériau. Il est ainsi possible d'occulter l'information détectée par la partie centrale et de ne prendre en considération que ce que détecte la partie périphérique.

La partie centrale et/ou la partie périphérique peuvent être morcelées. Certaines polarisations produisent des spots elliptiques, il est ainsi possible de repérer leurs grand et petit axes.

Pour pouvoir intercepter une coupe du faisceau laser réfléchi, on peut prévoir en outre des moyens de séparation de faisceaux pour séparer le faisceau laser réfléchi du faisceau laser incident placés entre l'objectif de focalisation et les moyens d'interception pour le faisceau laser réfléchi.

Le diaphragme est placé en amont des moyens de séparation de faisceaux pour le faisceau laser incident.

Les moyens de séparation peuvent comporter une lame semi réfléchissante, un réseau de diffraction, un cube séparateur de polarisation associé à une lame quart d'onde, la lame quart d'onde étant située en amont du cube séparateur de polarisation pour le faisceau laser réfléchi.

Pour augmenter l'ouverture numérique de l'objectif de focalisation, ce dernier peut comporter une lentille à immersion solide, la lentille à immersion solide étant la plus proche du support d'enregistrement lorsque l'objectif de focalisation comporte au moins une lentille autre que la lentille à immersion solide.

**BRÈVE DESCRIPTION DES DESSINS**

La présente invention sera mieux comprise à la lecture de la description d'exemples de réalisation donnés, à titre purement indicatif et nullement limitatif, en faisant référence aux dessins annexés sur lesquels :

la figure 1 (déjà décrite) représente un schéma d'un dispositif de test de matériaux d'un support d'enregistrement optique de l'art antérieur ;
la figure 2 montre un premier mode de réalisation d'un dispositif de test conforme à l'invention ;
les figures 3A, 3B montrent respectivement l'effet d'un matériau optiquement non linéaire et d'un matériau optiquement linéaire au niveau d'une coupe d'un faisceau laser réfléchi interceptée par les moyens d'interception dans le cas de l'art antérieur ;
les figures 4A, 4B montrent respectivement la coupe d'un faisceau laser incident et celle d'un faisceau laser réfléchi par une couche en matériau optiquement non linéaire lorsque l'ouverture numérique du faisceau laser incident a été volontairement réduite par rapport à celle de l'objectif de focalisation ;
les figures 5A, 5B montrent des variantes de détecteurs segmentés ;
la figure 6 montre un autre mode de réalisation d'un dispositif de test conforme à l'invention ;
les figures 7A, 7B montrent respectivement la coupe d'un faisceau laser incident et celle d'un faisceau laser réfléchi par une couche en matériau optiquement non linéaire lorsque l'ouverture numérique du faisceau laser incident a été volontairement réduite par rapport à celle de l'objectif de focalisation, ce dernier possédant une lentille à immersion solide ;
les figures 8A, 8B illustrent l'étendue des lobes de diffraction obtenus avec le dispositif de l'invention en présence d'une couche de matériau optiquement linéaire et d'une couche de matériau optiquement non linéaire.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

**EXPOSÉ DÉTAILLÉ DE MODES DE RÉALISATION PARTICULIERS**

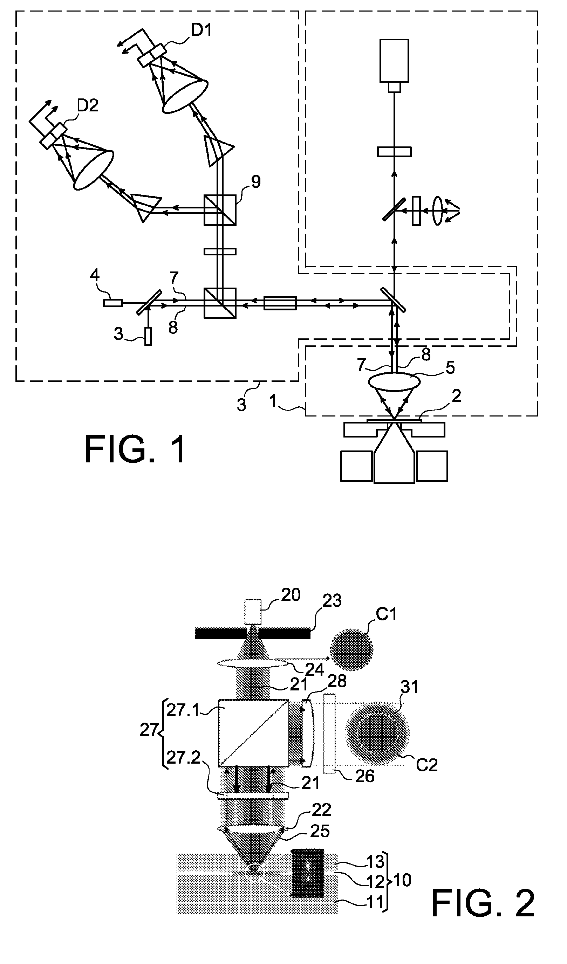

On va maintenant s'intéresser en se référant à la figure 2 à un dispositif de test pour la caractérisation de matériaux d'un support d'enregistrement optique 10 conforme à l'invention. Dans l'exemple, on suppose que le support d'enregistrement 10 comporte un substrat 11 recouvert, dans cet ordre, d'une couche en matériau optiquement non linéaire 12 puis d'une couche de protection 13. C'est ce matériau optiquement non linéaire que l'on va caractériser. Il peut s'agir d'un disque à super résolution. Le substrat 11 peut être en polycarbonate et la couche de protection 13 un vernis. Le matériau optiquement non linéaire peut être par exemple de l'arséniure de gallium, de l'antimoniure d'indium, de l'antimoniure de gallium, un absorbant saturable ou un polymère photoréfractif. Un tel matériau possède un indice de réfraction qui varie de manière non linéaire avec l'intensité d'un faisceau laser utilisé pour l'inscription ou la lecture.

C'est dans la couche en matériau optiquement non linéaire 12 que vont être inscrites les données à enregistrer et lors de l'inscription, il se produit une altération du matériau non linéaire. En variante, il est possible que la couche en matériau optiquement non linéaire ne soit qu'une couche de masquage d'une couche sous-jacente dans laquelle sont inscrites les données à enregistrer.

Le dispositif de test comporte une source laser 20, par exemple de type diode laser, destinée à diriger un faisceau laser incident 21 vers le support d'enregistrement 10. Le faisceau laser incident 21 passe à travers un objectif de focalisation 22 et est focalisé sur le matériau à caractériser, c'est-à-dire dans l'exemple, la couche en matériau optiquement non linéaire 12 du support d'enregistrement 10. Entre l'objectif de focalisation 22 et la source laser 20, on place de préférence une lentille de collimation 24, pour que le faisceau laser incident 21 soit le plus parallèle possible à son entrée dans l'objectif de focalisation 22. Il est possible que la lentille de collimation soit intégrée à la source laser, c'est-à-dire à la diode laser. Selon l'invention, on insère un diaphragme 23 sur le chemin du faisceau laser incident 21 avant qu'il ne pénètre dans l'objectif de focalisation 22 de manière à réduire artificiellement l'ouverture numérique du faisceau laser incident 21 à une valeur inférieure à l'ouverture numérique nominale de l'objectif de focalisation 22. Le diaphragme 23 peut être placé en amont de la lentille de collimation 24 pour le faisceau laser incident 21 ou en aval, c'est-à-dire entre la source laser 20 et des moyens de séparation 27 placés en aval de la lentille de collimation et décrits ultérieurement. Le diaphragme 23 est donc placé dans le plan de la pupille d'éclairage, c'est-à-dire n'importe où entre la source laser 20 et les moyens de séparation 27.

Le diamètre de la lentille de collimation 24 définit ce que l'on appelle la pupille d'émission et celui de l'objectif de focalisation 22, ce que l'on appelle la pupille de collection ou de réception.

Le diaphragme 23 aura de préférence une ouverture circulaire dont le diamètre est ajustable. L'ouverture numérique du faisceau laser incident 21 aura une valeur comprise entre environ 40 % et 90% de celle de l'objectif de focalisation 22. Des valeurs préférentielles sont, par exemple, 45%, 60%, 85%. Le fait que le diaphragme 23 soit ajustable permet de choisir la valeur de l'ouverture numérique à donner au faisceau laser incident 21. Ces valeurs particulières ne sont pas des valeurs standard d'ouvertures numériques.

Le faisceau laser incident 21 est réfléchi par le matériau à caractériser, c'est-à-dire la couche 12 en matériau optiquement non linéaire du support 10 qui est dans le plan focal de l'objectif de focalisation 22, et un faisceau laser réfléchi 25 retraverse l'objectif de focalisation 22. Le faisceau laser réfléchi 25 est intercepté par des moyens d'interception 26. On placera préférentiellement les moyens d'interception 26 dans le plan de la pupille de collection de l'objectif de focalisation 22, ce qui correspond à la réciproque du plan focal appelé aussi plan de Fourier. Les moyens d'interception 26 peuvent être tout simplement un écran ou un détecteur d'images intégré ou non à une caméra CCD ou CMOS. On décrira plus particulièrement un détecteur avantageux par la suite.

On s'aperçoit que la rétro-diffraction par la couche en matériau optiquement non linéaire 12 génère une distribution de champ dans le plan de la pupille de collection de l'objectif de focalisation 22, plus large que celle au niveau du lentille de collimation 24. Des coupes du faisceau laser incident 21 et du faisceau laser réfléchi 25 sont illustrées sur la figure 2 avec les références C1, C2 respectivement. La coupe C1 du faisceau laser réfléchi est donnée par les moyens d'interception 26. Elle correspond à l'image d'un spot 29 que le faisceau laser incident 21 projette sur la couche en matériau optiquement non linéaire 12. Cette image est vue à travers l'objectif de focalisation 22.

Pour pouvoir capturer la coupe du faisceau laser réfléchi 25 sans être gêné par le faisceau laser incident 21, puisque de part et d'autre de l'objectif de focalisation 22, le faisceau laser incident 21 et le faisceau laser réfléchi 25 suivent le même chemin optique, on utilise des moyens de séparation 27. Il peut s'agir de moyens de séparation sur la polarisation formés par exemple par un cube séparateur de polarisation 27.1 associé à une lame quart d'onde 27.2. En variante, le cube séparateur de polarisation aurait pu être remplacé par une lame semi-réfléchissante placée à 45°. La lame quart d'onde 27.2 se trouve en aval du cube séparateur de polarisation 27.1 pour le faisceau laser incident 21.

Le faisceau laser incident 21 émis par la source laser 20 est polarisé linéairement et transmis par le cube séparateur de polarisation 27.1. Comme dans l'art antérieur, il traverse ensuite la lame quart d'onde 27.2 qui transforme sa polarisation linéaire en polarisation circulaire. Après réflexion sur la couche de matériau optiquement non linéaire 12, le faisceau laser réfléchi 25 a une polarisation inverse. Il traverse la lame quart d'onde 27.2 qui lui rend sa polarisation linéaire. Il est alors réfléchi par le cube séparateur de polarisation 27.1 suivant une direction sensiblement orthogonale à celle qu'il avait avant d'atteindre le cube séparateur de polarisation 27.1. Le faisceau laser réfléchi 25 est focalisé par des moyens optiques de focalisation 28 avant d'être intercepté par les moyens d'interception 26.

On remarquera que par rapport au dispositif de test de l'art antérieur, le dispositif de test selon l'invention n'utilise qu'une seule source laser 20 et qu'une seule longueur d'onde. La simplification est flagrante.

Dans l'art antérieur, l'observation des matériaux des supports d'enregistrement optique est toujours faite avec un dispositif à faisceau laser incident et à faisceau laser réfléchi configurés pour que le faisceau laser incident et le faisceau laser réfléchi aient la même ouverture numérique. Le faisceau laser incident et le faisceau laser réfléchi passent à travers le même objectif de focalisation. Or, sans déséquilibre d'ouverture numérique entre le faisceau laser incident et le faisceau laser réfléchi, l'effet de la non-linéarité n'est pas visible.

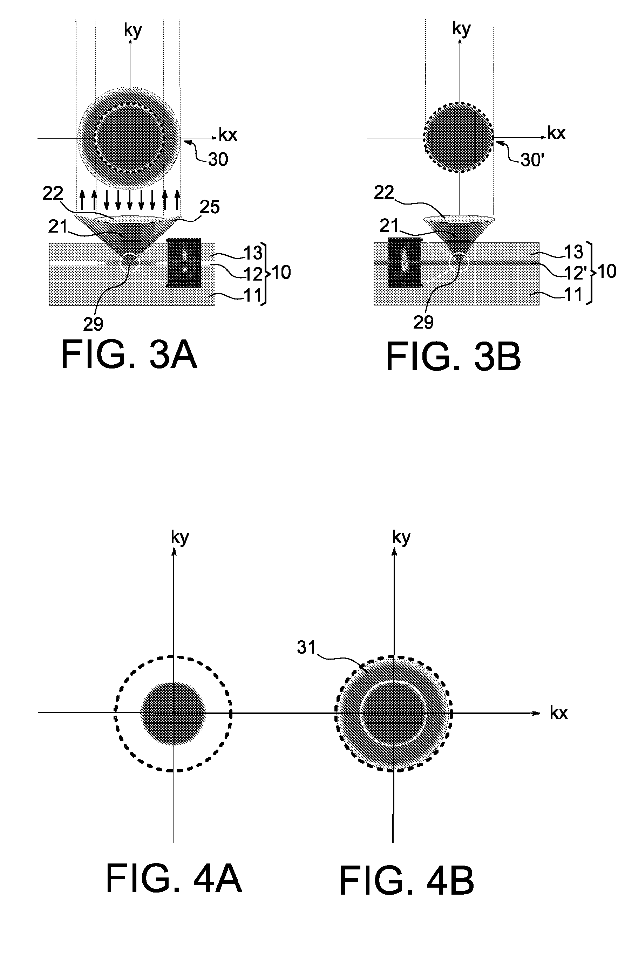

La figure 3A montre les effets de la présence, dans un support d'enregistrement optique, d'une couche en matériau optiquement non linéaire. Elle montre une image 30 d'un spot 29 formé sur la couche non linéaire 12 à l'aide d'un faisceau laser incident 21, cette image étant vue à travers l'objectif de focalisation 22. On a représenté avec des flèches le faisceau laser incident 21 et autour le faisceau laser réfléchi 25 hors de l'ouverture numérique du faisceau laser incident 21.

La figure 3B montre une coupe 30' du faisceau laser incident qui va former le spot 29. Le faisceau laser incident 21 et le faisceau laser réfléchi 25 ont la même ouverture numérique. La coupe 30 du faisceau laser incident 21 se présente sous la forme d'une tache circulaire sensiblement homogène de diamètre ON.k0. ON correspond à l'ouverture numérique du faisceau laser incident qui éclaire le support d'enregistrement et k0 le vecteur d'onde dans le vide, il vaut $2\pi/\lambda$ avec A longueur d'onde dans le vide du faisceau laser incident.

Sur la figure 3A, l'image 30 du spot n'est plus sensiblement homogène et elle est plus grande, elle a un diamètre ON'.k0. Elle ne peut être vue en totalité à travers l'objectif de focalisation 22. Les pointillés gras représentent le contour de l'image prise en compte par l'objectif de focalisation 22. Au-delà des pointillés se trouve un anneau externe 31 généré par la non-linéarité et qui contient de l'information sur la non-linéarité de la couche optiquement non linéaire. Cet anneau n'est pas visible.

L'image 30 du spot 29 interceptée au niveau de la pupille de collection de l'objectif de focalisation 22 pourra aussi être appelée pupille de retour.

Il y a un lien de transformée de Fourier optique entre le spot dans la couche en matériau optiquement non linéaire 12 et la coupe 30 du faisceau laser réfléchi observée dans le plan de la pupille de collection de l'objectif de focalisation 22.

La répartition spatiale de la réflectivité de la couche optiquement non linéaire 12 est conséquente de la variation locale de l'indice réfraction. Celle-ci, généralement d'ordre deux suit une loi de variation qui dépend de l'intensité du faisceau laser incident.

Ainsi au niveau de la couche optiquement non linéaire 12, la lumière du faisceau laser réfléchi 25 est le produit de l'amplitude de la lumière du faisceau laser incident 21 par la distribution de réflectivité, elle-même altérée par la distribution d'intensité du faisceau incident. La courbe de réflectivité peut être jusqu'à deux fois plus étroite que le spot.

Il s'en suit dans le plan de la pupille de collection de l'objectif de focalisation 22, c'est-à-dire quasiment dans le plan de Fourier, un élargissement de l'image 30 du spot 29 se formant sur la couche en matériau non linéaire 12 prenant la forme d'un anneau externe 31 dont le diamètre intérieur est ON.k0 et dont le diamètre extérieur est ON'.k0. L'image du spot est vue à travers l'objectif de focalisation. L'image 30 est élargie mais le spot 29 est plus confiné puisque le faisceau laser incident 21 a une ouverture numérique volontairement réduite dans le dispositif de test de l'invention.

Les figures 4A, 4B montrent des images observables avec un dispositif de test selon l'invention, dans le cas du test d'un matériau optiquement non linéaire. Sur la figure 4A, on a représenté une coupe du faisceau laser incident qui a une ouverture numérique volontairement réduite. La coupe a un diamètre réduit volontairement.

Sur la figure 4B, il s'agit d'une image du spot projeté sur la couche en matériau optiquement non linéaire, cette image étant vue à travers l'objectif de focalisation et interceptée dans le plan de la pupille de collection de l'objectif de focalisation. La partie centrale a un diamètre réduit car l'ouverture numérique du faisceau laser incident a été réduite. Un anneau externe 31 est visible, il permet de qualifier la non-linéarité optique du matériau. Les pointillés indiquent l'extension maximale de la non-linéarité. Sur ces deux figures l'intensité du fond représente la distribution de l'intensité dans le plan d'interception.

La brillance de l'anneau externe 31 permet de qualifier la force de la non-linéarité et son étendue traduit la nature même de la non-linéarité dominante.

Les moyens de d'interception 26 servent à relever l'extension de l'anneau externe 31, en terme d'ouverture numérique, ainsi que l'énergie relative que contient cet anneau illuminé par rapport à la partie centrale de l'image du spot vue à travers l'objectif de focalisation.

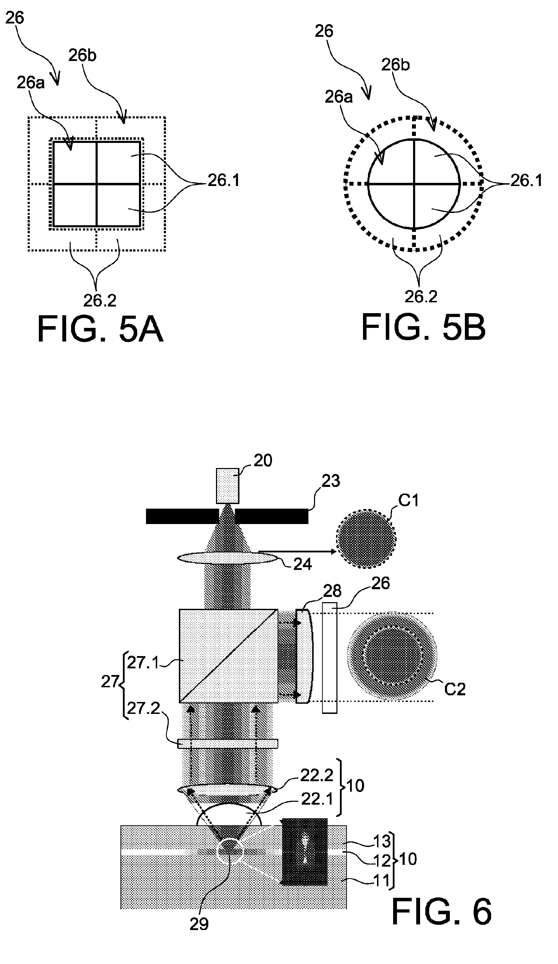

Pour réaliser les mesures, on peut utiliser un faisceau laser incident continu ou un faisceau laser incident en impulsions dont la durée peut être de l'ordre de la ou de quelques nanosecondes. La lecture se fait avec le faisceau laser incident continu et l'enregistrement avec le faisceau laser incident en impulsions. Lorsque les moyens d'interception 26 sont un détecteur, ce dernier peut être segmenté comme représenté sur les figures 5A ou 5B.

Sur la figure 5A le détecteur segmenté 26 comporte une partie centrale 26a qui peut être formée de quatre segments sensiblement carrés 26.1 et une partie périphérique 26b qui entoure la partie centrale et qui peut être formée de quatre segments 26.2 sensiblement en forme de L.

Les segments 26.1, 26.2 qu'ils appartiennent à la partie centrale 26a ou à la partie périphérique 26b sont placés les uns à côté des autres. Chaque segment 26.1, 26.2 sera formé d'un pavage de détecteurs élémentaires. Les détecteurs élémentaires ne sont pas représentés. Il peut s'agir de détecteurs CCD, CMOS, TFT associés à des photodiodes, à deux transistors, à cinq transistors.

La partie centrale peut être déviée vers un détecteur standard déjà utilisé dans des dispositifs de lecture et/ou d'enregistrement optique pour assurer un asservissement de la focalisation du faisceau optique incident et/ou un suivi de piste sur le support d'enregistrement.

Sur la figure 5B, le détecteur 26 est maintenant globalement circulaire. La partie centrale 26a peut être formée de quatre segments 26.1 en forme de quartiers et la partie périphérique 26b est en forme d'anneau, elle peut être morcelée en quatre tronçons 26.2 sensiblement égaux. Chacun des tronçons 26.2 peut border un segment 26.1 en forme de quartier.

La partie centrale 26a peut être dédiée à la focalisation du faisceau laser réfléchi et aux asservissements. La partie périphérique 26b peut être dédiée à l'observation de l'anneau externe mais peut également servir en asservissement.

On peut ainsi avec de tels détecteurs segmentés 26 occulter l'image acquise par la partie centrale et ne prendre en considération que celle acquise par la partie externe.

On peut envisager d'accroître l'ouverture numérique du faisceau laser réfléchi 25 en utilisant dans l'objectif de focalisation 22 une lentille à immersion solide 22.1. Lorsque l'objectif de focalisation 22 comporte plusieurs lentilles 22.1, 22.2 en cascade, la lentille à immersion solide 22.1 est la plus proche du support d'enregistrement 10. Cette configuration est représentée sur la figure 6. La lentille à immersion solide 22.1 a une face bombée à l'opposé du support d'enregistrement 10.

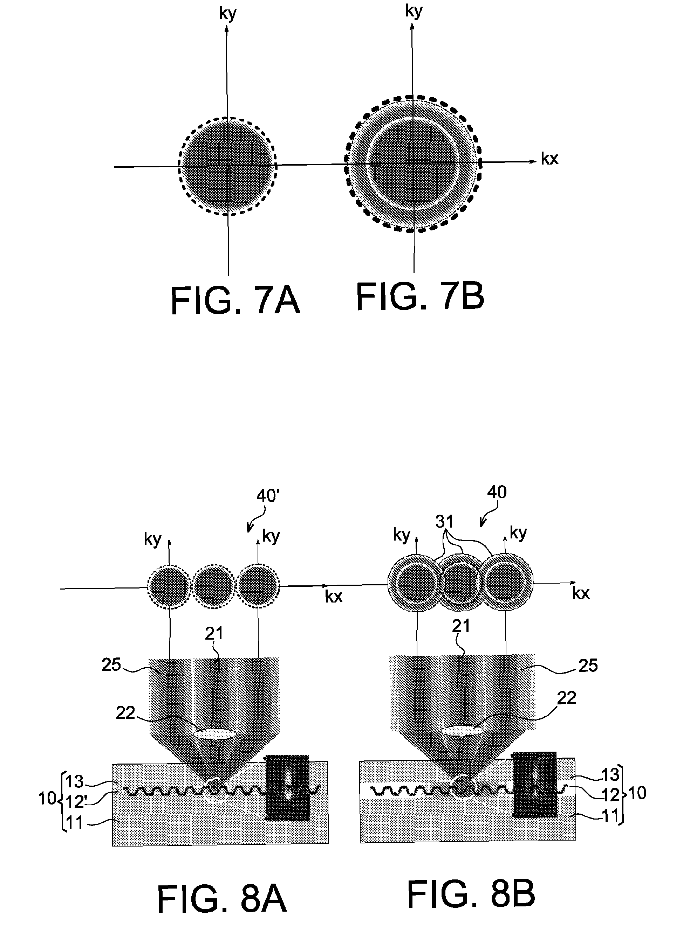

Sur la figure 7A, on a représenté une coupe du faisceau laser incident qui a une ouverture numérique volontairement réduite. La coupe a un diamètre réduit volontairement. Cette figure est similaire à la figure 4A, sauf que la présence d'une lentille à immersion solide permet d'accroître tous les diamètres. Elle fait augmenter la limite observable représentée en pointillés.

Sur la figure 7B, on a représenté la répartition d'intensité dans le plan de la pupille de l'objectif de focalisation ou de la lentille à immersion solide que comporte cet objectif. La partie centrale a un diamètre réduit car l'ouverture numérique du faisceau laser incident a été réduite. Un anneau externe 31 est visible, il permet de qualifier la non-linéarité optique du matériau. Les pointillés illustrent la limite observable dans l'espace de Fourier. Cette limite est augmentée par rapport aux exemples des figures 4A, 4B à cause de la présence de la lentille à immersion solide. Sur ces deux figures l'intensité du fond représente la distribution de l'intensité dans le plan d'interception.

L'extension de la distribution d'intensité du faisceau laser réfléchi dans l'espace de Fourier, c'est-à-dire dans l'espace de la pupille de collection de l'objectif de focalisation est une conséquence directe d'une transformée de Fourier de la réflectivité sur la surface de la couche en matériau optiquement non linéaire ayant un confinement plus petit que celui du spot. On peut écrire que le champ scalaire $E_{det}$ dans l'espace des moyens d'interception 26 est :

$$E_{\text{det}} = P_1(k_x, k_y).(P_0(k_x, k_y) * TF(r(x - x_s, y - y_s)) \quad (1)$$

P1 représente la fonction disque de diamètre égal à ON.k0, ON étant l'ouverture numérique du faisceau laser incident
P0 est la fonction de la pupille d'émission de diamètre égal à ON.k0, cette pupille d'émission correspond au disque interne visible sur les figures 4A et 7A
r est la fonction réflectivité translatée de la position xs, ys du support d'enregistrement à la position x, y qui est la position du détecteur
TF est la transformée de Fourier.

La non-linéarité optique du matériau induit, par un changement d'indice de réfraction centré sur la position xs, ys du support d'enregistrement, une courbe de réflectivité gaussienne de largueur $\beta / \sqrt{\pi}$, donnée par :

$$r = r_0 e^{-\Pi(x - x_s)^2 + (y - y_s)^2 / \beta^2} \quad (2)$$

β représentant un simple paramètre.

La transformée de Fourier est aussi une gaussienne de largeur $1/\beta/\sqrt{\pi}$ déphasée donnée par :

$$TF(r)(k_x, k_y) = r_0 e^{-i\Pi(k_x x_s + k_y y_s)} e^{-\Pi\beta^2(k_x^2 + k_y^2)} / \beta \quad (3)$$

On considère que la zone de variation de réflectivité sur le support d'enregistrement suit la distribution de l'intensité par effet Kerr, elle-même induite par une variation d'indice de réfraction de type :

$$n(l) = n_0 + n_2 I \quad (4)$$

dans la mesure où la non-linéarité du matériau est d'ordre 2. I représente l'intensité dans le matériau non linéaire, $n_0$ est une partie de l'indice de réfraction indépendante de I et $n_2$ est une autre partie de l'indice de réfraction proportionnelle à I.

Le rapport $\beta / \sqrt{\pi}$ est plus petit que la taille du spot $\lambda/2ON$

L'extension de la transformée de Fourier de la réflectivité est plus importante que la pupille de collection de l'objectif de focalisation. La fonction de la pupille d'émission P0 est convoluée dans l'équation (1) par une fonction plus large correspondant à l'équation (3). La résultante est une fonction d'étendue plus importante que la pupille d'émission. Il suffit donc qu'elle soit interceptée par une fonction P1 plus étendue que P0 pour capturer l'information due à la non-linéarité optique du matériau.

Le dispositif de test peut aussi bien fonctionner en régime statique, c'est-à-dire un support d'enregistrement statique par rapport au dispositif de test, qu'en régime dynamique, c'est-à-dire avec un support d'enregistrement mobile par rapport au dispositif de test. Si le dispositif d'enregistrement est un disque, il est animé d'un mouvement de rotation par rapport au dispositif de test dont la vitesse peut aller jusqu'à plusieurs mètres par seconde.

L'avantage du dispositif de test selon l'invention est qu'il offre la possibilité d'observer et d'évaluer directement l'état de l'image du spot du à la présence d'une couche de matériau optiquement non linéaire. Il permet d'expliquer directement comment la couche non linéaire, même si elle n'est qu'une couche de masquage et que les données sont inscrites dans une couche d'inscription qui lui est sous-jacente, permet d'accroître la résolution de l'inscription et d'associer à chaque couche en matériau optiquement non linéaire une efficacité de masquage. On se réfère aux figures 8A, 8B.

Sur la figure 8A, on a représenté un dispositif de test selon l'invention qui fonctionne avec un support d'enregistrement ne présentant pas de couche en matériau optiquement non linéaire. La couche (référencée 12'), dans laquelle sont inscrites des données et qui est donc structurée, possède des propriétés optiquement linéaires. Les données sont inscrites avec un pas p=($\lambda$/20N), $\lambda$ représente la longueur d'onde du faisceau laser émis par la source (non représentée) et ON l'ouverture numérique du faisceau laser incident 21. Les images 40' obtenues au niveau de la pupille de collection de l'objectif de focalisation 22 sont exemptes de l'extension annulaire qui caractérise la non-linéarité.

Sur la figure 8B, au contraire, en présence d'une couche en matériau optiquement non linéaire 12, au niveau de l'image 40, la quantification des anneaux externes 31 permet d'évaluer la résolution du système et donc de qualifier la couche en matériau optiquement non linéaire.

La forme de l'anneau externe 31 permet de prédire la prédisposition de la couche en matériau optiquement non linéaire à servir de masque à un support d'enregistrement de type super-RENS. Les mesures réalisées avec le dispositif de test selon l'invention permettent à l'aide de modèles théoriques de focalisation à travers des couches minces en matériau optiquement non linéaire de remonter à la nature de la non-linéarité et à sa force et idéalement à des coefficients naturels de susceptibilité non linéaire du matériau.

Bien que plusieurs modes de réalisation du dispositif de test aient été représentés et décrits de façon détaillée, on comprendra que différents changements et modifications puissent être apportés sans sortir du cadre de l'invention notamment au niveau de l'objectif de focalisation et des moyens de séparation de faisceaux laser.

**Revendications**

1. Dispositif de test pour la caractérisation d'un matériau utilisé dans un support d'enregistrement optique (10) comportant, une source laser (20) destinée à diriger un faisceau laser incident (21) vers le support d'enregistrement optique (10), le faisceau laser incident (21) traversant un objectif de focalisation (22) avant d'atteindre le support d'enregistrement optique (10) et de s'y réfléchir en un faisceau laser réfléchi (25), **caractérisé en ce qu'**il comporte un diaphragme (23) pour réduire l'ouverture numérique du faisceau laser incident (21) en dessous de celle de l'objectif de focalisation (22), ce diaphragme (23) se trouvant entre la source laser (20) et l'objectif de focalisation (22) et un dispositif d'interception (26) d'une coupe du faisceau laser réfléchi (25) après son passage dans l'objectif de focalisation (22) mais avant qu'il n'atteigne le diaphragme (23).

**2.** Dispositif de test selon la revendication 1, dans lequel le diaphragme (23) a une ouverture ajustable.

**3.** Dispositif de test selon l'une des revendications précédentes, dans lequel l'objectif de focalisation (22) possède une pupille de collection, la coupe du faisceau laser réfléchi (25) étant réalisée dans le plan de la pupille de collection de l'objectif de focalisation (22).

**4.** Dispositif de test selon l'une des revendications précédentes, dans lequel l'objectif de focalisation (22) possède un plan focal objet, le matériau du support à caractériser étant à placer dans le plan focal objet.

**5.** Dispositif de test selon l'unes des revendications précédentes dans lequel le dispositif d'interception (26) est un écran, un détecteur intégré ou non dans une caméra à CCD ou CMOS.

**6.** Dispositif de test selon la revendication 5, dans lequel le détecteur (26) est segmenté avec une partie centrale (26a) et une partie périphérique (26b) qui entoure la partie centrale, la partie périphérique étant destinée à détecter un anneau externe (31) qui apparaît si le faisceau laser incident (21) s'est réfléchi sur le matériau à caractériser et que ce matériau est un matériau optiquement non linéaire (12), cet anneau contenant de l'information sur la non-linéarité du matériau.

**7.** Dispositif de test selon la revendication 6, dans lequel la partie centrale (26a) et/ou la partie périphérique (26b) sont morcelées.

**8.** Dispositif de test selon l'une des revendications précédentes, comportant en outre des moyens de séparation (27) de faisceaux pour séparer le faisceau laser réfléchi (25) du faisceau laser incident (21) placés entre l'objectif de focalisation (22) et les moyens d'interception (26) pour le faisceau laser réfléchi (25).

**9.** Dispositif de test selon l'une des revendications 7 ou 8, dans lequel le diaphragme est placé en amont des moyens de séparation (27) de faisceaux pour le faisceau laser incident (21).

**10.** Dispositif de test selon l'une des revendications 7 à 9, dans lequel les moyens de séparation (27) comportent une lame semi-réfléchissante, un réseau de diffraction, un cube séparateur de polarisation (27.1) associé à une lame quart d'onde (27.2), la lame quart d'onde (27.2) étant en amont du cube séparateur de polarisation (27.1) pour le faisceau laser réfléchi (25).

**11.** Dispositif de test selon l'une des revendications précédentes, dans lequel l'objectif de focalisation (22) comporte une lentille à immersion solide (22.1), la lentille à immersion solide (22.1) étant la plus proche du support d'enregistrement (10) lorsque l'objectif de focalisation (22) comporte au moins une lentille (22.2) autre que la lentille à immersion solide (22.1).

# FIG. 1

# FIG. 2

FIG. 3A

FIG. 3B

FIG. 4A

FIG. 4B

FIG. 5A

FIG. 5B

FIG. 6

FIG. 7A          FIG. 7B

FIG. 8A          FIG. 8B

**EP 2 175 260 A1**

Europäisches
Patentamt

European
Patent Office

Office européen
des brevets

# RAPPORT DE RECHERCHE EUROPEENNE

Numéro de la demande

EP 09 17 2210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZIJP F, MARTYNOV Y V: "Static tester for characterization of optical near-field coupling phenomena" OPTICAL STORAGE AND OPTICAL INFORMATION PROCESSING (SPIE), vol. 4081, 2000, pages 21-27, XP002534693 * page 22 * ----- | 1,3-5,8, 9,11 | INV. G01N21/95 G11B7/26 |
| A | NAKANO T, KIKIKAWA T, TOMINAGA J: "Near-field scattering property in readout signals of a super-resolution near-field structure disk" THE 15TH ANNUAL MEETING OF THE LASERS AND ELECTRO-OPTICS SOCIETY (IEEE), vol. 1, 2002, pages 235-236, XP002534694 * le document en entier * ----- | 1-11 | |
| A | LIU R, ET AL: "A near field coupling model for analyzing optical readout" INTERNATIONAL SYMPOSIUM ON OPTICAL MEMORY AND OPTICAL DATA STORAGE (IEEE), 2002, pages 219-221, XP002534695 * le document en entier * ----- | 1-11 | DOMAINES TECHNIQUES RECHERCHES (IPC) G01N G11B |

Le présent rapport a été établi pour toutes les revendications

| Lieu de la recherche | Date d'achèvement de la recherche | Examinateur |
|---|---|---|
| Munich | 23 octobre 2009 | Croucher, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0057413 A

**Littérature non-brevet citée dans la description**

- **Masud Mansuripur et al.** Static tester for characterization of phase-change, dye-polymer, and magneto-optical media for optical data storage. *Applied Optics,* vol. 38 (34), 7095-7104